# EUROPEAN PATENT APPLICATION

(11) **EP 4 471 652 A1**
(43) Date of publication of application: **04.12.2024**
(21) Application number: 23176789.8
(22) Date of filing: 01.06.2023
(51) Int. Cl.: G06F 30/27, G06F 111/04

(54) **METHOD FOR ASSISTING AN ENGINEER IN DESIGNING A TECHNICAL SYSTEM, DATA PROCESSING APPARATUS AND COMPUTER PROGRAM**

(71) Applicant: Airbus S.A.S., 31700 Blagnac (FR)
(72) Inventor: Comin, Alberto, 82024 Taufkirchen (IT); Sciammetta, Nunzio, 82024 Taufkirchen (IT)
(74) Representative: OTN Airbus SAS

(57) **Abstract**

The present invention provides a method for assisting an engineer in designing a technical system, comprising the steps of receiving (S1) an input message from the engineer; processing (S2) the input message using a neural network to identify the content of the input message and extract technical system requirements, wherein the technical system requirements include at least a component having at least one parameter and a constraint; generating (S3) a proposed system design by determining at least one parameter of the component based on the constraint using the neural network; generating (S4) a response message containing the proposed system design using the neural network; and providing (S5) the proposed system design to the engineer, wherein the neural network is configured as a large language model, LLM, and trained with a plurality of template systems and template components in the related technical field. Further, the present invention provides a corresponding data processing apparatus (1) comprising a processor (4), which is configured to perform the inventive method and a corresponding computer program.

## Description

The invention relates to a method for assisting an engineer in designing a technical system. The invention is furthermore concerned with a corresponding data processing apparatus and computer program.

Typically, a technical system is built from components. An optical system, for example, is built from components such as lenses, mirrors, waveplates etc. to build, for example, a classical optical telescope, or an optical train of a free-space laser communication terminal. Typically, the final design of such optical systems are designed on a software tools, which apply at least ray tracing for determining parameters of the component. In typical software tools in optics, the optical design is partly automated in that the engineer can start from an initial design and a merit function, which is used to optimize the shape and position of the lenses. In order to optimize the optical system, such software tools typically change parameters such as the curvature of surfaces, whereas changing more fundamental properties, such as e.g. the f-number or type of the surfaces, requires manual selection by the engineer.

In the case of RF technology, an RF system typically comprises components such as a front end, antennas, amplifiers, filters, splitters, etc. To design an RF system, a design engineer might need an amplifier with desired specifications. However, the user requires detailed knowledge for breaking down the amplifier into subcomponents and choosing a suitable architecture. Some software tools are available to assist the user in selecting these components. There are software tools for RF technology available that are used to simulate the propagation of the electromagnetic field. They typically are based on finite-element calculations and an engineer still requires some knowledge for designing components and systems using these software tools. Some of these tools provide logs when an error occurs for manual debugging.

In complex electronic system design, such as e.g. an FPGA, software tools are available to leverage the knowledge required for the engineer designing the system. Some of these tools may use reinforcement learning for chip design.

Therefore, the problem of the current invention is to provide a tool for an engineer that leverages a system design.

According to the invention, this problem is solved in each case by the subject matters of the independent claims.

According to a first aspect of the invention, a method for assisting an engineer in designing a technical system is provided. The method comprises receiving an input message from the engineer, processing the input message using a neural network to identify the content of the input message and extract technical system requirements, wherein the technical system requirements include at least a component having at least one parameter and a constraint, generating a proposed system design by determining at least one parameter of the component based on the constraint using the neural network, generating a response message containing the proposed system design using the neural network, and providing the proposed system design to the engineer, wherein the neural network is configured as a large language model, LLM, and trained with a plurality of template systems and template components in the related technical field.

According to a second aspect of the invention, a data processing apparatus is provided. The data processing apparatus comprises an input device, a data storage, and a processor configured to perform the inventive method.

According to a third aspect of the invention, a computer program is provided. The computer program comprises instructions, which, when the program is executed by a computer, cause the computer to carry out the inventive method.

A fundamental concept of the invention is to provide a tool comprising an artificial intelligence for a system design for the engineer. The artificial intelligence is configured as a neural network, more precisely as a large language model, LLM, capable of natural language processing. The LLM thus understands and correspondingly processes human language. In addition, the neural network has been trained with related technology, such as template systems, which represent systems (e.g. optical, RF or chips) that have been designed in the past for a certain purpose. The neural network has also been trained on the related components or building blocks related to the template systems. The neural network thus achieves a deep understanding in the related technical field and is able to design systems by only setting some general technical requirements.

A particular advantage in the solution according to an aspect of the invention is that automated generative optical design of a technical system becomes possible. The automation of this step increases the productivity of the engineer. For example in the field of RF technology, which is used in various industrial fields, such as throughout a production line of an automobile or an aircraft, the method and related devices can provide deeper RF knowledge, that otherwise would have been provided by highly skilled engineers, which are not always available or costly. The neural network of the present invention, however, is able to support an engineer, who is not familiar with the related technical field.

The neural network can easily be trained to new components. In this way, these new components, such as e.g. metalenses, will be integrated automatically in a proposed system design, so that engineers applying the method stays up to date with newest technology, thereby getting familiar with these components. In this way, the technical field such as e.g. optical and RF design, is made accessible to end users, who know their application requirements but may not have the necessary knowledge for translating them into detailed optical specifications. These in particular apply to related parameters.

The term LLM is broadly understood in that a neural network has been trained with a vast amount of language input to enable natural language processing. This enables the LLM to extract the content of an input or a prompt from the engineer. The language model is thus capable to understand the application context, for which the proposed system is applied. This can be e.g. imaging, optical or laser communications, satellite communication or for RF airborne systems, which are usually very complex. The neural network translates the technical system requirements appropriately to the application. This eases the communication between the system planners, which may include system architects, designers, and engineers. Typically, a number of iterations with modifications to a candidate system are required to satisfy these groups. reduces the number of iterations. The use of the neural network for system design according to the invention reduces the number of these iterations. Furthermore, technical fields such as e.g. space applications typically have particular constraints that even experienced engineers in the technical field may not yet know. This invention enables the engineer to be productive without further time-consuming training.

Although the explanations above are mainly directed to optical and RF system design, the present invention has broader applicability and can be applied to other technical fields.

Advantageous embodiments and further developments emerge from the description with reference to the figures.

According to some aspects of the device according to the invention, the constraint is related to a characteristic of at least one of a wavelength, a frequency, an f-number, a numerical aperture, a field of view, a working distance, a size, a material, a total weight, a thickness, a height, a width, a power, a point-spread-function, an aberration, a curvature, a shape, a transmittance and a reflectance, wherein the characteristic is at least one of a minimum, a maximum, a range or a size. In this way, a broad range of components of the proposed system design can be characterized and optimized.

According to some further aspects of the device according to the invention, the template component is at least one of an amplifier, a mixer, a lens, a mirror, a fiber coupler, a switch, a splitter, a combiner, an attenuator, a converter, an optical filter and a waveguide, a source, a transistor, a diode, a logic gate. The component may also be interpreted more broadly as being e.g. an, e.g. air, gap between two components. However, the template components are not limited to these listed components. The here listed template components represent some of the basic components the neural network has been trained on and which may be utilized in the proposed system. A template system utilizing at least some of the components may be e.g. a lens system, such as a telescope, an objective, a laser system, a transmitter, a receiver, an antenna, a particular electronic circuit such as an operational amplifier, an H-bride and others.

According to some further aspects of the device according to the invention, the proposed system design is at least one of an optical system design, an RF system design and an integrated circuit design or a combination thereof. These represent the most common technical fields that usually required highly trained engineers.

According to some further aspects of the device according to the invention, the at least one parameter of the component includes at least one of: a curvature, a material, a position, a size, a property and a type, however, are not limited to the listed parameters. The listed parameters represent common parameters that often have to be optimized for a special application.

According to some further aspects of the device according to the invention, the neural network is further trained with information about characteristics of the relevant template systems and the relevant components, wherein the characteristics include at least one of a specific weight, a power consumption, a refractive index, a standard size, a transmittance, a reflectance. In this way, more broad constraints or goals, such as a total weight or a maximum power consumption, of the required system can be understood and be considered in the proposed system.

According to some further aspects of the device according to the invention, the neural network is configured as at least one of Generative Pretrained Transformer, GPT or a Generative Artificial Intelligence. These models represent a suitable set for addressing the technical problem. These models can also be fine-tuned in the related technical fields for more accuracy of the proposed optical system. These models may also be fine-tuned on the presentation of the response provided to the engineer.

According to some further aspects of the device according to the invention, the neural network is fine-tuned to provide domain-specific language, wherein the proposed system design is provided to the engineer in the domain-specific language. The response message may then contain code in the domain-specific language. In this way, the accuracy of the proposed system design can be improved. Furthermore, it enables to further process the provided data of the proposed system design in a tool using domain-specific language. Such a tool can be e.g. Zemax Optic Studio, Oslo, and Code-V for optical technology, CST Studio, HFSS, Comsol, Microwave Office for RF design or Vivado for FPGA design. The data provided in domain-specific language may then be easily fed into a software optimizer of such tools by the engineer for further optimization of related parameters. Optionally, the response message may include a merit function, which has been determined by the neural network and which can be used for further numerical optimization.

According to some aspects of the method according to the invention, generating the proposed system design comprises applying a steepest gradient descent optimization for the at least one parameter of the component of the proposed system design. Instead of using a separate tool, the optimization can be included in the same process or method. This reduces manual processing of the data by the engineer.

According to some aspects of the method according to the invention, the method further comprises processing the input message using the neural network to identify an initial system requirement, generating an initial system design based on the identified relevant template systems and relevant components, the technical system requirements and the initial system requirement using the neural network, and providing the initial system design to the engineer. In this way, the technical system requirements necessary for the neural network to generate a suitable proposed system design are relieved. The neural network is able to propose an initial system design based on initial system requirements. These steps may thus be conducted in advance of the method steps as described so far. In this way, the method delivers an initial system design, which can then be optimized using the neural network and/or a classical optimization algorithm such as a steepest gradient descent. Alternatively, a database, which includes information about the template systems and the template components, may be accessed and searched for the initial system design based on the initial system requirement. The initial system design may thus be provided by producing a query and searching the database for a suitable template system and template components e.g. stored in a lookup table in the database.

According to some aspects of the method according to the invention, the method further comprises calculating a figure of merit of the proposed system design, wherein the figure of merit is based on the technical system requirements. The method further comprises the iterating steps of modifying at least one parameter of a component of the proposed system design using the neural network, and calculating an updated figure of merit of the proposed system design and training the neural network by reinforcement learning. The preceding steps are carried out until a ratio of two subsequent values of the updated figure of merit to the figure of merit is below a predetermined value. In this way, reinforcement learning is implemented into the neural network and the method as described above for optimizing the parameters of the proposed system. Reinforced learning enables the neural network to improve itself each time it is used without additional external training or input of additional training data.

According to some aspects of the method according to the invention, the method further comprises extracting supplemental system requirements using the neural network, wherein generating the proposed system design is based on the constraint and the supplemental system requirements using the neural network. In this way, the method provides a means for setting the content of the input message into a more appropriate context that may not be provided explicitly by the user. In this way, the requirement for the user or engineer to formulate a valid request is relieved.

According to some further aspects of the method according to the invention, the method further comprises receiving a confirmation from the engineer, extracting additional constraints about the proposed system design, and generating a proposed system design by determining at least one parameter of the component based on the additional constraint using the neural network. The confirmation thus represents feedback on whether the response has been correctly addressed the request of the engineer.

According to some aspects of the method according to the invention, receiving the input message includes receiving a vocal input message from the engineer, and converting the vocal input message into the input message. A vocal-to-text interpreter is applied to generate the vocal input message into a text for the input message. The neural network configured as LLM may then adopt this text as input message or may summarize the text to generate the input message. In this way, the input or prompt from the engineer can be conducted vocally by the engineer. Optionally, the response may also be provided as a vocal response to the engineer, applying a tex-to-vocal interpreter.

The above embodiments and further developments can be combined with each other as desired, if useful. In particular, all features of the method for assisting an engineer in designing a technical system are transferable to the data processing apparatus and/or the computer program, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

The present invention is explained more specifically below on the basis of the exemplary embodiments indicated in the schematic figures, in which:
- Fig. 1: shows a flow chart for a method for assisting an engineer in designing a technical system according to an embodiment of the invention;
- Fig. 2: shows a flow chart for a method for assisting an engineer in designing a technical system according to a further embodiment of the invention;
- Fig. 3: shows a flow chart for reinforced learning implemented in the method for assisting an engineer in designing a technical system according to a further embodiment of the invention.
- Fig. 4a-b: show a schematic illustration of a lens design processed by the method for assisting an engineer in designing a technical system according to a further embodiment of the invention;
- Fig. 5a-d: show a schematic illustration of a lens design processed by the method for assisting an engineer in designing a technical system according to a further embodiment of the invention; and
- Fig. 6: shows a schematic illustration of a data processing apparatus configured to perform the method according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

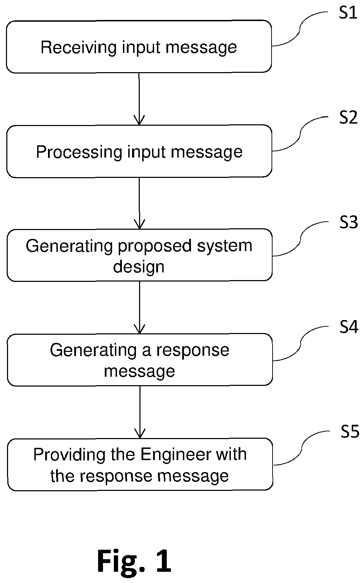

Fig. 1 shows a flow chart for a method for assisting an engineer in designing a technical system according to an embodiment of the invention.

The method for assisting an engineer in designing a technical system shown in Fig. 1 comprises the following: At first, an input message is received S1 from the engineer. The input message may be a prompt from the engineer or any other user. In this embodiment, the input message is received S1 by a vocal input message from the engineer. The vocal input message is converted into the input message in text form. For example, the vocal input message may be spoken into a microphone and be recorded by a computer and stored in a storage medium such as a memory. The conversion may be conducted by any suitable vocal-to-text interpreter software stored on a computer. In further embodiments, the input message may be directly input as a text message by the engineer.

Furthermore, the input message is processed S2 using a neural network to identify the content of the input message and extract technical system requirements. The neural network is configured as a large language model, LLM, and trained with a plurality of template systems and template components in the related technical field. The term LLM is broadly understood in that a neural network has been trained with a vast amount of language input to enable natural language processing. This enables the LLM to extract the content of an input or a prompt of the engineer. The language model is thus capable to understand the application context, for which the proposed system is applied. In case the LLM does not understand the technical system requirements, it might request the engineer to specify his request. The LLM is also able to understand the application context within the content of the message, for which the proposed system is applied. This can be e.g. imaging, optical or laser communications, satellite communication or for RF airborne systems, which are usually very complex. The neural network translates the technical system requirements appropriately to the application.

The template component may relate to an amplifier, a mixer, a lens such as e.g. a spheric lens, an aspheric lens, a metalens, a mirror, a fiber coupler, a switch, a splitter, a combiner, an attenuator, a converter, an optical filter and a waveguide, a source, a capacity, a resistor, an inductivity, a transistor, a diode, a logic gate, a gap. However, the template components are not limited to these listed components. The listed components represent some of the basic components the neural network has been trained with and the proposed system may utilize. A template system utilizes at least some of the components, e.g. one of the components previously listed. The template system may be a lens system, such as a telescope, an objective, a laser system, a transmitter, a receiver, an antenna, a particular electronic circuit such as an operational amplifier, an H-bride and so on.

In further embodiments, the neural network may in addition be configured as a Generative Pretrained Transformer, GPT, or a Generative Artificial Intelligence. In further embodiments, the neural network is fine-tuned in the related technical fields to improve the understanding of the technical system requirements. Thus, the neural network may further be trained with information about characteristics or properties of the relevant template systems and the relevant components. These characteristics may include a specific weight, a power consumption, a refractive index, a standard size, a transmittance, a reflectance and others.

The technical system requirements include at least a component having at least one parameter and a constraint, which is considered by the neural network during processing. The parameter may include a curvature e.g. of a lens, a material of a component, a position, a size, a property and a type, however, are not limited to the listed parameters. Similarly, a parameter may also relate to a distance or air gap between two other components. The technical system requirements may include general features like f-number numerical aperture, field of view or similar or equivalent parameters, as described above. The technical system requirements may also include general constraints in terms of materials, size and weight. The technical system requirements prompted by the engineer are translated into constraints or goals, which may be e.g. a max size of the point spread function, PSF, or a maximum/minimum thicknesses of various elements.

The constraint may be related to a characteristic of at least one of a wavelength, a frequency, an f-number, a numerical aperture, a field of view, a working distance, a size, a material, a total weight, a thickness, a height, a width, a power, a point-spread-function, an aberration, a curvature, a shape, a transmittance and a reflectance, wherein the characteristic is at least one of a minimum, a maximum, a range or a size.

As next step, a proposed system design is generated S3 by determining at least one parameter of the component based on the constraint using the neural network. In this step, the neural network merges all relevant information and generates the proposed system. Ideally, the neural network generates a system, which best matches the technical system requirements. Dependent on the technical requirements, this step thus involves an optimization step, which may be performed by the neural network based on the trained data. Alternatively or in addition, a classical optimization step, such a steepest gradient descent optimization, can be applied for the parameter/s of the component of the proposed system design. In general, much more than a single parameter is optimized by this step.

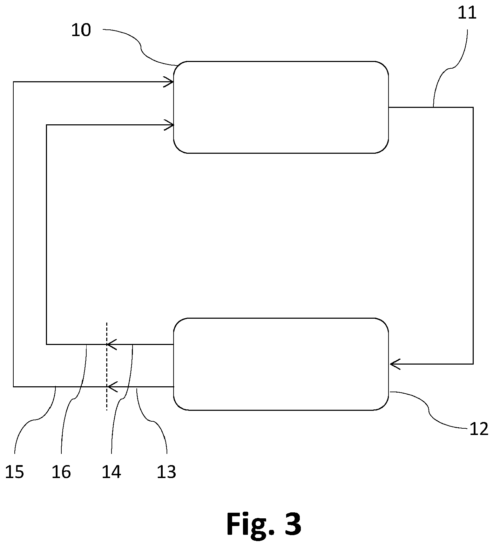

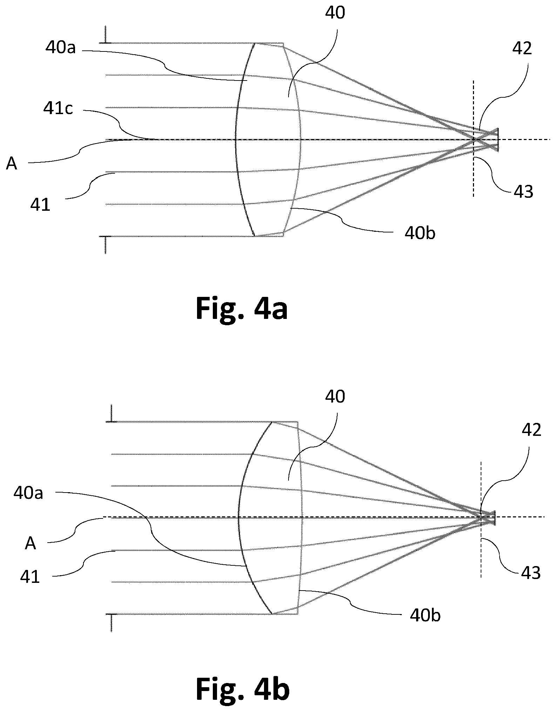

As described above, the proposed system design can be an optical system design, an RF system design and an integrated circuit design, or a combination thereof, however, is not limited to these technical fields. As an example, the method will be described further below in Fig. 3 and 4 with respect to an optical system.

Further, the step of generating S4 a response message containing the proposed system design using the neural network is provided. The neural network is fine-tuned to provide domain-specific language. Domain-specific language relates to Code that is understood by a professional software tool in the relevant art. The proposed system design is provided to the engineer in the domain-specific language. The response message thus contains code in the domain-specific language and may be used by such tool. Such a tool can be e.g. Zemax Optic Studio, Oslo, and Code-V for optical technology, CST Studio, HFSS, Comsol, Microwave Office for RF design or Vivado for FPGA design. In further embodiments, the response message describing the proposed system design is a text message using language processing or an audio message including vocal elements.

In the next step, the proposed system design is providing S5 to the engineer. This is performed by displaying the response message on a screen of a display. In further embodiments, the proposed system design is provided to the engineer in form of an audio message through speakers.

The neural network thus first produces detailed system requirements of the system and a system design that attempts to fulfill these. The response message presented as output in a predefined structured form, eg. in the format used by a popular optics software for the reason of compatibility. In further embodiments, the response message includes a merit function, which has been determined by the neural network and which can be used for further numerical optimization.

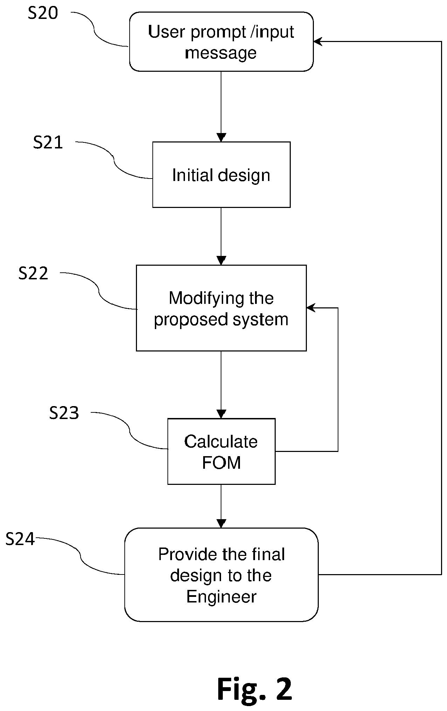

Fig. 2 shows a flow chart for a method for assisting an engineer in designing a technical system according to a further embodiment of the invention.

The method shown by the flow chart in Fig. 2 is based on the method shown in Fig. 1. However, in this embodiment of the method, S20 the input message is processes S20 using the neural network to identify an initial system requirement. For this, the neural network may produce a data-base query for accessing and searching a database. The database includes information about the template systems and the template components, based on the initial system requirement to identify relevant template systems and relevant template components, e.g. in the form of a lookup-table. In the next step, an initial system design is generated S21 based on the identified relevant template systems and relevant components, the technical system requirements and the initial system requirement using the neural network. This initial system design may be selected by a classical algorithm in this case. However, the step of generating S21 the initial system design may also be performed by the neural network, which has been trained with the template systems and template components, based on the initial system requirements.

The initial system design may then be provided S24 to the engineer, or may further be processed, as shown in Fig. 2 and described in the following. The initial design can be presented to the user in a domain specific language, e.g. the one used by Zemax to specify lenses, or as a table of optical surfaces with relevant parameters, such as radius, curvatures, as generic code (e.g. Python) calling specific libraries (e.g. PyOpTools) and implement the output parameters to a component or a subsystem, rather than surface by surface as done in traditional optical design software tools.

The method shown in Fig. 2 further includes an optimization step based on reinforcement learning. This includes the step of calculating a figure of merit of the proposed system design. The figure of merit is a function, which is based on the technical system requirements. Then, the following iterating steps are conducted: Modifying S22 at least one parameter of a component of the proposed system design using the neural network, and calculating S23 an updated figure of merit of the proposed system design, thereby training the neural network by reinforcement learning based on a policy. The preceding steps are carried out until a ratio of two subsequent values of the updated figure of merit to the figure of merit is below a predetermined value. The mechanism of reinforcement learning is further explained with reference to the following Fig. 3.

In further embodiments, alternatively or in addition, the method may apply a steepest gradient descent optimization for the at least one parameter of the component of the proposed system design.

Fig. 2 further shows an additional feedback loop as an additional user prompt or input that occurs at step S24 when providing the engineer with the proposed system design. The engineer input a feedback or confirmation message so that the neural network receives a confirmation from the engineer about the proposed system design. The neural network then extracts additional constraints about the proposed system design that the engineer may have described. The neural network then generates a proposed system design based on the additional constraint. This can be repeated until the engineer is satisfied with the provided proposed system design. The engineer then readily builds the proposed system and implements the system into his application.

Fig. 3 shows a flow chart for reinforcement learning implemented in the method for assisting an engineer in designing a technical system according to a further embodiment of the invention.

In reinforcement learning, an agent 10 is configured to learn and make decisions on actions 11, which are sent to an environment 12. In the present case, the neural network acts as the agent 11 and the technical system, i.e. the initial system, which evolves through optimization to the proposed system, is part of the environment. The environment responds to those actions 11 and presents a new state 13. The environment also provides a reward 14, which is a numerical value that the agent 10 tries to maximize over time. In the present case, this numerical value is represented by the figure of merit as described above. The new state 13 and reward 14 are then input into the agent as the current state 15 and the current reward 16. A complete specification of an environment defines a task, which is here provided as the technical system requirements. The agent 10 then implements a mapping or policy from the current states to probabilities of selecting each possible action. Reinforced learning specifies how the agent 10 changes its policy as a result of its experience. The goal of the agent 10 is related to maximizing the total amount of reward it receives over the long run.

In the case of optics, training of the reinforcement learning optimizer is initially performed by feeding the neural network a vast corpus of lens designs such as from manuals, databases, etc., and their related performance. The neural network applying reinforcement learning can thus be trained by generating random lens requirements and then letting it evaluate, which would be equivalent as "playing lens optimization games" equivalent to an artificial intelligence training in games with strict rules, such as chess.

By this method, reinforcement learning is used to train the neural network to iteratively improve the system design until the user requirements are met. The difference from traditional numerical optimizations is that modifying the system architecture is performed by the neural network. This may include e.g. adding or removing a lens, replacing a single amplifier with two amplifiers and so on. The effect of these stronger modifications are described further below.

Fig. 4a and Fig. 4b show a schematic illustration of a lens design processed by the method for assisting an engineer in designing a technical system according to a further embodiment of the invention.

In Fig. 4a, a lens 40 is tested with seven rays 41 incident parallel to an optical axis A on a first lens surface 40a, which has a convex shape. The rays 41 are propagating in a vacuum or air parallel to the optical axis A in equal distances from each other. A center ray 41c propagates on the optical axis A. Each ray 41 includes three different wavelengths in the visible spectrum. The rays 41 are diffracted at the first surface 40a due to the different refractive indices of the lens 40 to the one for e.g. air. The rays 41 exit the lens 40 at a second surface 40b, where the rays 41 are diffracted again and propagate towards a focal point 42, which is in the focal plane 43 of the lens 40. In Fig. 4a, it can be seen that due to spherical and chromatic aberrations, the rays 41 do not cross exactly at the focal point 42.

In Fig. 4b, the curvature of the second surface 40b has been modified through optimization as described before. In this way, the focus of the rays 41 in the focal point 42 is improved in that their deviation at the focal point 42 and focal plane 43 is reduced. This rather simple optimization process may be performed by the neural network as described above.

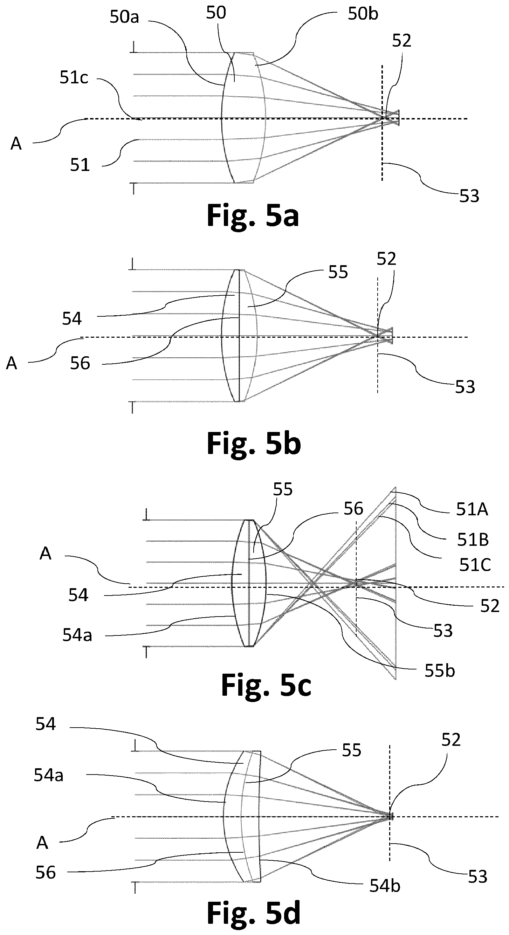

Fig. 5a to Fig. 5d show a schematic illustration of a lens design processed by the method for assisting an engineer in designing a technical system according to a further embodiment of the invention.

Similar to Fig. 4a, in Fig. 4b, a lens 50 is tested with seven rays 51 incident parallel to an optical axis A on a first lens surface 50a, which has a convex shape. The rays 51 are propagating parallel to the optical axis A in equal distances from each other. Each ray 51 includes three different wavelengths in the visible spectrum, whereas a center ray 51c propagates on the optical axis. The rays 51 are diffracted at the first surface 50a due to the refractive index of the lens 50. The rays 51 exit the lens 50 at a second surface 50b, where the rays 51 are diffracted again and propagate towards a focal point 52 of the lens, which is in the focal plane 53 of the lens 50.

In Fig. 5b, the formerly convex-convex shaped lens 50 has been split into two plane-convex first and second lenses 54, 55, which are in physical contact at an interface 56, which has a plane shape. The first and second lenses 54, 55 are thus configured as a combined lens. It can be seen that by this operation, the deviation of the rays 51 in the focal point 52 or focal plane 53 remains unchanged.

In Fig. 5c, the material of the second lens 55 has been modified. The material of the second lens 55 has a, in this embodiment considerably, different refractive indices. This leads to a further deviation of the rays 51 in the focal plane 53. In this embodiment, the splitting of the rays of the different wavelengths is clearly shown in Fig 5c as, in the present case, blue wavelength ray 51A, green wavelength ray 51B and red wavelength ray 51C.

Fig. 5d shows a system that is based on the system shown in Fig. 5c but has been optimized for optimum focus modifying surfaces 54a, 55b, 56. The interface 56 has now a convex shape, whereas the first surface 54a of the first lens 54 has still a convex shape and the second surface 55b of the second lens 55, which is the back surface of the combined lens, has now a concave shape. The first and second lenses 54, 55 are thus configured as a meniscus lens, thus having a meniscus shape. It is shown in Fig. 5d that the deviation of rays 51 in the focal point 52 and focal 53 has been reduced considerably.

Fig. 5a to 5d thus demonstrate the capability of the described neural network. The described optimization is classically performed with a human-assisted approach, but is realizable by the described neural network. While a classical numerical optimization would not attempt to split the lens into two lenses by adding an interface and changing the material of one lens for worse performance (see Fig. 5c). The neural network as described above proceeds with optimizing three optical surfaces in order to reach a better optimization point. The neural network can also apply new types of technologies, for which the heuristics may partly be unexplored. Examples are meta-surfaces or free-form optics.

Although not demonstrated here in Fig. 5a-d, it is understood that the neural network is able to conduct the following optimization for generating the proposed system design: displace or rotate an optical element, increase the thickness, radius of curvature or other parameters of an optical surface, change the material of an element, split an element in two by adding an optical interface in the middle, fuse two adjacent elements into one, e.g. to undo the split, etc..

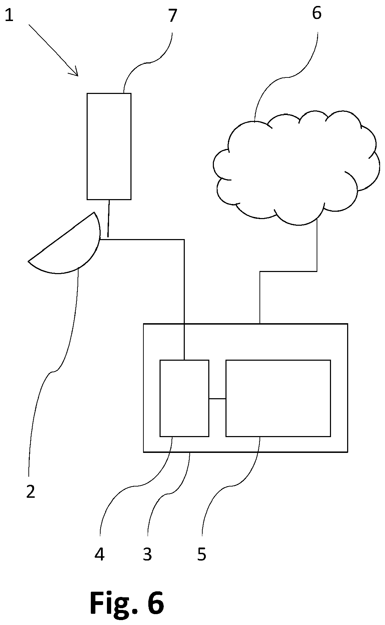

Fig. 6 shows a schematic illustration of a data processing apparatus configured to perform the method according to a further embodiment of the invention.

Fig. 6 shows a data processing apparatus. The data processing apparatus 1 may be any suitable form of an electronic device such as a computer suitable for the task.

In this embodiment, it comprises a computer housing 3 and a keyboard as input terminal 2, which can be used by a user, who typically is an engineer (not shown) to input the input message. The computer housing 3 comprises a processor 4 comprises and a data storage 5. Instructions are stored on the data storage 5 that related to the method as described above. In particular, it comprises the data about the neural network architecture configured as LLM. It further comprises a database including the template systems and the template components relating to the technical system requirements set by the engineer. In this way, when the instructions stored on the data storage 5 are executed, the processor 4 is configured to perform the method as described above. The data storage 5 thus comprises a computer program comprising instructions, which, when the program is executed by the processor 4 of a computer, cause the computer to carry out the method as described above. The computer and the processor 4 may be connected to a cloud 6, which contains databases for further information related to components or system of the technical field.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of reference signs

- 1: Data processing apparatus
- 2: input terminal
- 3: computer housing
- 4: processor
- 5: data storage
- 6: cloud
- 7: screen
- 10: agent
- 11: action
- 12: environment
- 13: status
- 14: reward
- 15: current status
- 16: current reward
- 40: lens
- 40a: first surface of the lens
- 40b: second surface of the lens
- 41: ray
- 41c: center ray
- 42: focal point
- 43: focal plane
- 50: lens
- 50a: first surface of the lens
- 50b: second surface of the lens
- 51: ray
- 51c: center ray
- 52: focal point
- 53: focal plane
- 54: first lens
- 54a: first surface of the first lens
- 55: second lens
- 55b: second surface of the second lens
- 56: interface
- S1-S5: method steps
- S20-S24: method steps

## Claims

1. Method for assisting an engineer in designing a technical system, comprising:
receiving (S1) an input message from the engineer;
processing (S2) the input message using a neural network to identify the content of the input message and extract technical system requirements, wherein the technical system requirements include at least a component having at least one parameter and a constraint;
generating (S3) a proposed system design by determining at least one parameter of the component based on the constraint using the neural network;
generating (S4) a response message containing the proposed system design using the neural network; and
providing (S5) the proposed system design to the engineer,
wherein the neural network is configured as a large language model, LLM, and
trained with a plurality of template systems and template components in the related technical field.

2. Method according to claim 1, wherein the constraint is related to a characteristic of at least one of a wavelength, a frequency, an f-number, a numerical aperture, a field of view, a working distance, a size, a material, a total weight, a thickness, a height, a width, a power, a point-spread-function, an aberration, a curvature, a shape, a transmittance and a reflectance, wherein the characteristic is at least one of a minimum, a maximum, a range or a size.

3. Method according to claim 1 or 2, wherein the template component is at least one of: a lens system, an RF frontend, an amplifier, a mixer, a lens, a mirror, a fiber coupler, a switch, a splitter, a combiner, an attenuator, a converter, an optical filter and a waveguide, a source, a transistor, a diode, a logic gate.

4. Method according to any of the preceding claims, wherein the proposed system design is at least one of an optical system design, an RF system design and an integrated circuit design or a combination thereof.

5. Method according to any of the preceding claims, wherein the at least one parameter of the component includes at least one of: a curvature, a material, a position, a size, a property and a type.

6. Method according to any of the preceding claims, wherein the neural network is further trained with information about characteristics of the relevant template systems and the relevant components, wherein the characteristics include at least one of a specific weight, a power consumption, a refractive index, a standard size, a transmittance, a reflectance.

7. Method according to any of the preceding claims, wherein the neural network is configured as at least one of Generative Pretrained Transformer, GPT, or a Generative Artificial Intelligence.

8. Method according to any of the preceding claims, wherein the neural network is fine-tuned to provide domain-specific language,
wherein the proposed system design is provided to the engineer in the domain-specific language.

9. Method according to any of the preceding claims, wherein generating the proposed system design comprises applying a steepest gradient descent optimization for the at least one parameter of the component of the proposed system design.

10. Method according to any of the preceding claims, further comprising:
processing (S20) the input message using the neural network to identify an initial system requirement;
generating (S21) an initial system design based on the initial system requirement using the neural network; and
providing (S24) the initial system design to the engineer.

11. Method according to any of the preceding claims, further comprising:
calculating a figure of merit of the proposed system design, wherein the figure of merit is based on the technical system requirements; and
the following iterating steps:
modifying (S22) at least one parameter of a component of the proposed system design using the neural network, and
calculating (S23) an updated figure of merit of the proposed system design and
training the neural network by reinforcement learning,
wherein the preceding steps are carried out until a ratio of two subsequent values of the updated figure of merit to the figure of merit is below a predetermined value.

12. Method according to any of the preceding claims, further comprising:
receiving a confirmation from the engineer,
extracting additional constraints about the proposed system design, and
generating a proposed system design by determining at least one parameter of the component based on the additional constraint using the neural network.

13. Method according to any of the preceding claims, wherein receiving the input message includes:
receiving a vocal input message from the engineer; and
converting the vocal input message into the input message.

14. Data processing (1) apparatus comprising an input terminal (2), a data storage (5), and a processor (4) configured to perform the method according to any of the preceding claims.

15. Computer program comprising instructions, which, when the program is executed by a computer, cause the computer to carry out the method of any of claims 1 to 13.
